# EUROPÄISCHE PATENTSCHRIFT

(11) **EP 4 114 606 B1**
(45) Veröffentlichungstag und Bekanntmachung des Hinweises auf die Patenterteilung: **13.11.2024**
(21) Anmeldenummer: 21709373.1
(22) Anmeldetag: 01.03.2021
(51) Int. Cl.: B23K 15/00, B23K 15/06, B23K 20/02, B23K 20/227, B23K 20/24, B23K 28/02, B23K 101/34, B23K 101/36, B23K 103/04, H01M 8/0202

(54) **VERFAHREN ZUR HERSTELLUNG VON BAUTEILEN DURCH VAKUUM-ELEKTRONSCHWEISSEN UND/ODER PRESSSCHWEISSEN**
METHOD FOR PRODUCING COMPONENTS BY LOCAL VACUUM ELECTRON BEAM WELDING AND/OR PRESSURE WELDING
PROCÉDÉ DE PRODUCTION DE COMPOSANTS PAR SOUDAGE PAR FAISCEAU D'ÉLECTRONS À VIDE LOCAL ET/OU SOUDAGE PAR PRESSION

(30) Priorität: 03.03.2020 DE 102020202691
(43) Veröffentlichungstag der Anmeldung: 11.01.2023
(73) Patentinhaber: Fraunhofer-Gesellschaft zur Förderung der angewandten Forschung e.V., 80686 München (DE)
(72) Erfinder: PUSCHMANN, Markus, 09126 Chemnitz (DE); RIEDEL, Frank, 09126 Chemnitz (DE)
(74) Vertreter: Pfenning, Meinig & Partner mbB
(86) Internationale Anmeldenummer: PCT/EP2021/054977
(87) Internationale Veröffentlichungsnummer: WO 2021/175753

(56) Entgegenhaltungen:
- DE-A1- 102007 007 392
- DE-A1- 102016 200 387
- US-A1- 2006 054 664
- US-A1- 2008 292 916
- US-A1- 2019 363 372

## Beschreibung

Die Erfindung betrifft ein Verfahren zur Herstellung von Bauteilen und dabei insbesondere die Herstellung von Bipolarplatten für elektrochemische Zellen oder Wärmetauscherelementen, siehe Anspruch 1.

Die Erfindung kann für das Fügen von plattenförmigen Bauteilen eingesetzt werden, bei den eine sequentielle oder kontinuierliche Bereitstellung der ebenen oder bereits umgeformten Halbzeuge in Bandform möglich oder denkbar ist und komplexe Schweißnahtgeometrien in der Verbindungsebene zwischen den beiden Fügepartnern hergestellt werden müssen. Das Anwendungsgebiet mit dem höchsten Potential ist die Fertigung von Bipolarplatten für Brennstoffzellen oder Wärmetauscherplatten mit komplexen und filigranen zweidimensionalen Schweißnahtgeometrien. Es wäre auch denkbar mit Hilfe des Verfahrens unbearbeitete ebene Blech- oder Folienbänder mit einer Schweißnahtstruktur zu versehen um die so verbunden und vorbereiteten Halbzeuge einer anschließenden Wirkmedienumformung (z.B. Innenhochdruckumformung) zuzuführen.

Das stoffschlüssige Fügen von plattenförmigen sehr dünnen metallischen Bauteilen mit zweidimensionalen, häufig sehr komplexen Verbindungsgeometrien stellt sowohl unter technischen als auch unter wirtschaftlichen Gesichtspunkten ein Problem dar.

Solche Bauteile sind z.B. Bipolarplatten für Brennstoffzellen oder Platten für Wärmetauscher. Solche metallischen Bauteile (Kathoden- und Anodenseite) weisen Blechdicken: ≤ 0,1 mm, mit der Tendenz diese Blechdicken weiter zu verringern, auf.

Wegen der Anforderungen an solche Bipolarplatten bezüglich z.B. der hohen elektrischen Leitfähigkeit und hohen Korrosionsbeständigkeit werden solche Bauteile in der Regel aufwendig an ihren Oberflächen beschichtet. Die Beschichtungen können Kohlenstoffschichten auf Edelstahl (nichtrostendem Stahl) oder auch Goldschichten sein. Solche Schichten werden bei besonderen Atmosphärenbedingungen, u.a. auch im Vakuum hergestellt.

Ein typisches Verfahren zur Herstellung solcher Bauteile aus umgeformten (geprägt, strukturierten) Halbzeugen ist das Laserschweißen der einzelnen Halbzeuge (in der Regel 2 spiegelbildlich strukturierten, übereinander gelegter, Plattenpaare) in Schweißvorrichtungen. Dabei werden üblicherweise zwei Platten übereinander gelegt und miteinander verschweißt. Dabei wird ein Laserstrahl senkrecht zu den Plattenebenen auf ein Halbzeug gerichtet und dabei beide Partner werden mit einer Schweißnaht verbunden.

Das Laserstrahlschweißen erreicht als Verbindungstechnologie dabei für solche Bauteile physikalische Grenzen:
Um die dünnen Metallplatten oder -folien Poren(Loch)frei zu verschweißen, ist ein technischer Nullspalt erforderlich. In der Regel wird dafür 1/10 der Blechdicke als Maximalwert empfohlen. Das bedeutet für Blech(folien)dicken von 0,1 mm eine Größenordnung von 10 µm Maximalspalt zwischen den Folien. Bei der doch verhältnismäßig großen Bauteilfläche und der großen Anzahl der Nähte und Nahtlängen, die aber ausschließlich dicht verschweißt werden müssen, erscheint die technische Herausforderung zunehmend schwieriger erfüllbar.

Weiterhin behindern die o.g. Beschichtungen die Schweißtechnologie und erzeugen Imperfektionen im Prozess.

Die Eigenschaften der Bauteile so verschweißten werden auch dadurch verschlechtert, dass die Beschichtungen in den Bereichen der Schweißnaht verbrannt oder anderweitig negativ beeinträchtigt werden.

Weiterhin ist prozesstechnisch die maximale Schweißgeschwindigkeit bei den aktuell angewendeten Verfahrensvarianten durch bestimmte physikalische Effekte (z.B. Humpingeffekt) beschränkt.

Unter wirtschaftlichen Gesichtspunkten sind die aktuell realisierten Lösungen für das Fügen zu langsam, um eine kosteneffiziente Fertigung zu ermöglichen. Ursachen sind die prozesstechnisch begrenzte Schweißgeschwindigkeit und die langen Nebenzeiten (Einlegen und Spannen in Schweißvorrichtung, Teilentnahme nach dem Schweißen) pro Bauteil, was in Summe zu langen Fertigungszeiten und damit zu hohen Kosten führt. Aber insbesondere bereitet der qualitätssensitive Gesamtprozess Probleme.

Auch wenn verschiedene Fügeverfahren genannt werden, gehen alle bekannten Lösungen davon aus, dass das Fügen der beiden Teilplatten in separaten Vorrichtungen und/oder in einer sequentiellen getakteten Fertigungslinie durchgeführt wird. D.h. jede Bipolarplatte wird aus zwei einzelnen plattenförmigen Elementen, die zusammen in einer speziellen Schweißvorrichtung gespannt und positioniert werden, hergestellt.

In der industriellen Praxis wird als Schweißverfahren hauptsächlich das Laserstrahlschweißen eingesetzt. Der Laserstrahl trifft dabei von einer Seite auf die Blechoberfläche eines plattenförmigen Elements und bildet dabei eine I-Naht am Überlappstoß aus. Die Schweißgeschwindigkeit ist dabei infolge prozesstechnischer Grenzen nicht beliebig steigerbar, so dass die Fertigungsgeschwindigkeit durch den Schweißprozess limitiert wird. Des Weiteren erfordert diese Verfahrensführung ein sehr genaues spaltfreies Spannen aller zu fügenden Bereiche der beiden plattenförmigen Elemente, was in der Praxis nur mit großem Aufwand zu erreichen ist.

So sind aus US 2008/0292916 A1 (offenbarend den Oberbegriff des Anspruchs 1) Lösungsansätze für ein Fügen von Bipolarplatten unter Nutzung elektrischer Knoten bekannt.

Eine Vorrichtung und ein Verfahren zum Herstellen von Bipolarplatten sind in DE 10 2026 200 387 A1 beschrieben.

US 2019/0363372 A1 betrifft Bipolarplatten für Brennstoffzellen und deren Fertigung.

In DE 10 2007 007 392 A1 (offenbarend auch den Oberbegriff des Anspruchs 1) ist ein Verfahren zum Fügen von Bipolarplatten für einen Brennstoffzellenstapel bekannt.

Eine Bipolarplatte und ein Herstellungsverfahren dazu sind in US 2006/0054664 A1 offenbart.

Es ist daher Aufgabe der Erfindung, die Produktivität bei der insbesondere fluiddichten und stoffschlüssigen Verbindung dünner plattenförmiger Elemente sowie die Qualität der so hergestellten Bauteile zu erhöhen. Erfindungsgemäß wird diese Aufgabe mit einem Verfahren, das die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Bei dem erfindungsgemäßen Verfahren werden zwei übereinander angeordnete metallische plattenförmige Elemente mit jeweils einer maximalen Dicke von 0,5 mm, bevorzugt ≤ 0,1 mm fluiddicht und stoffschlüssig an ihren äußeren Randbereichen miteinander verbunden. Die stoffschlüssige Verbindung der plattenförmigen Elemente wird dabei unter Einhaltung von Vakuumbedingungen (< 300 mbar) durch eine Bestrahlung mit mindestens einem Elektronenstrahl ausgebildet. Die stoffschlüssige Verbindung kann aber auch allein oder zusätzlich mit einem Pressschweißverfahren ausgebildet werden. Die Umgebungsbedingungen für die Pressschweißtechnologie können sich anderen Randbedingungen anpassen, unterliegen aber keiner spezifischen Restriktion. Die stoffschlüssige Verbindung sollte dabei umlaufend um den äußeren Randbereich des entsprechenden Bauteils ausgebildet werden, so dass zwischen den plattenförmigen Elementen ein geschlossener Hohlraum vorhanden sein kann.

Die plattenförmigen Elemente werden entsprechend der Erfindung von einer Rolle kontinuierlich einem Bearbeitungsbereich, in dem die stoffschlüssige Verbindung ausgebildet wird, in einen Spalt zwischen zwei Walzen als Werkzeuge für das Pressschweißen zugeführt und die stoffschlüssige Verbindung kontinuierlich ausgebildet. Dabei bedeutet kontinuierlich auch die Förderung der plattenförmigen Elemente. Nach der Ausbildung der stoffschlüssigen Verbindung und ggf. der Ausbildung einer Beschichtung kann eine Vereinzelung mittels eines herkömmlichen Trennverfahrens durchgeführt werden.

Der mindestens eine Elektronenstrahl wird in den Spalt zwischen zwei dem Bearbeitungsbereich zugeführten plattenförmigen Elementen gerichtet und dabei ausgelenkt, um die stoffschlüssige Verbindung auszubilden. Dabei ist es vorteilhaft, wenn die plattenförmigen Elemente in einem spitzen Winkel zueinander geneigt in den Walzenspalt eingeführt werden und der mindestens eine Elektronenstrahl in Vorschubbewegungsrichtung der plattenförmigen Elemente von hinten in den Spalt auf Oberflächenbereiche der plattenförmigen Elemente gerichtet wird.

Bei der Erfindung kann ein Pressschweißverfahren durchgeführt werden, das ohne zusätzliche, bevorzugt aber mittels Erwärmung durch Widerstandserwärmung, Induktionserwärmung und/oder Erwärmung durch Strahlen erfolgt. Dabei können Prozesse der Diffusion, ähnlich dem Diffusionsschweißen eine Rolle spielen.

Entsprechend wird dabei auch eine Umformung der plattenförmigen Elemente im Bereich der auszubildenden stoffschlüssigen Verbindung durchgeführt. Die Umformung kann mit entsprechend konturierten Oberflächen der eingesetzten Werkzeuge ausgebildet werden. So kann beispielsweise die Oberfläche einer Walze im Bereich, in dem die stoffschlüssige Verbindung ausgebildet werden soll eine über den Umfang umlaufende Erhebung, insbesondere eine Erhebung mit dreieckigem oder konvex gebogenem Querschnitt und komplementär dazu an der Oberfläche einer zweiten Walze eine entsprechende Vertiefung ausgebildet worden sein. Dabei werden die plattenförmigen Elemente durch den Spalt zwischen den Walzen als Werkzeuge für ein Pressschweißverfahren hindurchgeführt und umgeformt.

Vor und/oder während der Durchführung des Pressschweißverfahrens kann eine Erwärmung der plattenförmigen Elemente durch elektrische Widerstandsheizung, mittels elektrischer Induktion oder durch Bestrahlung mit elektromagnetischer Strahlung durchgeführt werden. Dabei sollte die die Schmelztemperatur des metallischen Werkstoffs der plattenförmigen Elemente nicht erreicht und insbesondere nicht überschritten werden.

Vor oder während der Ausbildung der stoffschlüssigen Verbindung kann eine Umformung der plattenförmigen Elemente in Bereichen der plattenförmigen Elemente, die nicht miteinander stoffschlüssig verbunden werden, bevorzugt mit mindestens einer an der Oberfläche konturierten Walze und einer Gegenwalze durchgeführt werden. Dadurch lässt sich die Oberfläche zwischen den miteinander verbundenen plattenförmigen Elementen vergrößern bzw. es lassen sich Strömungskanäle ausbilden, die insbesondere bei Bipolarplatten für eine Zuführung und Verteilung von Brennstoff oder Oxidationsmittel nutzen lassen.

Im Anschluss an die Ausbildung der stoffschlüssigen Verbindung kann eine Beschichtung an den nach außen weisenden Oberflächen der miteinander verbundenen plattenförmigen Elemente und im Anschluss daran eine Vereinzelung hergestellter Bauteile mit einem Trennverfahren durchgeführt werden. Mit einer Beschichtung kann man die elektrische Leitfähigkeit erhöhen und ggf. auch die Korrosionsbeständigkeit verbessern.

Vorteilhaft kann eine Beschichtung, die mit Kohlenstoff gebildet ist, unter Vakuumbedingungen ausgebildet werden. Die Beschichtung kann dabei mit einem CVD- oder PVD-Verfahren erhalten werden, wobei die Beschichtung mit sp2 und/sp3 hybridisiertem Kohlenstoff in an sich bekannter Weise ausgebildet werden kann.

Die stoffschlüssige Verbindung und besonders vorteilhaft nachfolgend daran kann dann die Beschichtung in derselben Vakuumanlage bzw. -kammer ausgebildet werden. Dadurch kann auf zusätzlichen Aufwand, wie z.B. zusätzliche Schleusen und Unterdruckerzeuger verzichtet werden. Es sollte lediglich gesichert sein, dass der Beschichtungsprozess vom Fügeprozess unbeeinflusst bleibt. Dies kann beispielsweise mit einer entsprechenden Anordnung der Elemente in der Vakuumkammer, die zur Ausbildung der Beschichtung dienen und der Beachtung der Auslenkbewegung eines Elektronenstrahls in Richtung auf zu fügende Oberflächenbereiche der plattenförmigen Elemente berücksichtigt werden. Ggf. kann auch eine Blende in der Vakuumkammer dazu dienen, dass Beschichtungswerkstoff nicht in den Bearbeitungsbereich, in dem die stoffschlüssige Verbindung ausgebildet wird, gelangen kann.

Für die Fertigung von sehr großen Stückzahlen ist die erforderliche Zeit für die Bearbeitung nach dem Stand der Technik zu groß. Die Erfindung beschreibt eine Lösung für ein Fügeverfahren, welche das Verschweißen der beiden Teilplatten in einer kontinuierlichen Prozesskette vom Band/Coil mit sehr hohen Fügegeschwindigkeiten ermöglicht.

Drei fügetechnische Technologierouten bilden für die o.g. Problemstellungen den Lösungsansatz:
- Schmelzschweißtechnologien mit hochenergetisch fokussierten Strahlen (wie insbesondere Elektronenstrahlschweißen) im Vakuum
- Pressschweißtechnologien sowie
- eine Kombination aus beiden vorgenannten Technologien

Folgende Basisgedanken liegen den Lösungsansätzen der Erfindung zugrunde:
- Elektronstrahlschweißen im Vakuum ermöglicht Prozessbedingungen für Bauteile mit größter Sensitivität. Es kann ein sehr gebündelter Elektronenstrahl eingesetzt werden, der in seinen Aspektverhältnissen zur Dicke der plattenförmigen Elemente (de-Broglie-Wellenlänge: < 10⁻⁹ m-Bereich / Dicke der plattenförmigen Elemente: 100 µm) wieder ein akzeptables Verhältnis bietet.
- Das Vakuum selbst bietet bezüglich Oberflächenschichten, aber auch Verunreinigungen, ein Potenzial für "selbstreinigende" Effekte und schützt den Schweißprozess vor einer Interaktion mit möglichen Atmosphäreneinflüssen.
- Die Beschichtungsprozesse für metallische Bipolarplatten finden überwiegend im Vakuum statt. Deshalb ist es vorteilhaft, den Schweißprozess auch im Vakuum zu realisieren. Dabei bildet ein gro-ßes Potenzial, wenn die Prozessschritte bzw. Bearbeitungsbereiche so angeordnet werden, dass der Beschichtungsprozess nach dem Schwei-ßen erfolgen kann. Dadurch wird der Schweißprozess nicht durch die Beschichtung beeinflusst. Die Schweißnahtoberflächen können so auch beschichtet werden und somit hat die Bipolarplatte auch in Bereichen einer Schweißnaht als stoffschlüssige Verbindung einen vergleichbaren Korrosionsschutz und eine vergleichbare elektrische Leitfähigkeit mit den anderen Bereichen des Bauteils.

Da Schmelzschweißprozesse in diesem geringen Blech(Folien)dickenbereichen immer ein begrenztes technologisches Potential haben werden, können die Verschweißungen auch kombiniert oder auch ausschließlich mit Pressschweißverfahren erreicht werden. Dabei muss der Schweißprozess nicht unbedingt die Schmelztemperatur der Grundwerkstoffbereiche erreichen. Möglich sind technologische Verfahrensvarianten, wie Widerstandsschweißverfahren (Rollnahtschweißen).

Auch andere Pressschweißtechnologien, wie das Kaltpressschweißen oder Diffusionsschweißen, bieten Vorteile. Dabei können die verschiedenen Technologievarianten durch einen Erwärmungsprozess unterstützt werden. Unterschieden können dabei direkte Erwärmungsverfahren, wie die elektrische Widerstandserwärmung oder indirekte Erwärmungsverfahren, wie die Induktionserwärmung oder die Erwärmung mittels Strahlen (elektromagnetischer Wellen verschiedener Wellenlänge).

## Patentansprüche

1. Verfahren zur Herstellung von Bauteilen, bei denen zwei übereinander angeordnete metallische plattenförmige Elemente mit jeweils einer maximalen Dicke von 1 mm fluiddicht und stoffschlüssig an ihren äu-ßeren Randbereichen miteinander verbunden werden, und
die plattenförmige Elemente von einer Rolle kontinuierlich einem Bearbeitungsbereich, in dem die stoffschlüssige Verbindung ausgebildet wird, zugeführt werden und die stoffschlüssige Verbindung kontinuierlich ausgebildet wird,
**dadurch gekennzeichnet, dass**:
dabei
die stoffschlüssige Verbindung der plattenförmigen Elemente unter Einhaltung von Vakuumbedingungen durch eine Bestrahlung mit mindestens einem Elektronenstrahl erfolgt, wobei der mindestens eine Elektronenstrahl in einen Spalt zwischen zwei einem Bearbeitungsbereich zugeführten plattenförmigen Elementen gerichtet und dabei ausgelenkt wird, um die stoffschlüssige Verbindung auszubilden
und/oder
dass die Verbindung mit einem Pressschweißverfahren ausgebildet wird, wobei die plattenförmigen Elemente zwischen Walzen als Werkzeuge für das Pressschweißverfahren hindurchgeführt und umgeformt werden.

2. Verfahren nach Anspruch 1, **dadurch gekennzeichnet, dass** ein Pressschweißverfahren mit Umformung der plattenförmigen Elemente im Bereich der auszubildenden stoffschlüssigen Verbindung durchgeführt wird.

3. Verfahren nach dem vorhergehenden Anspruch, **dadurch gekennzeichnet, dass** das Pressschweißverfahren mittels Erwärmung mit gleichzeitiger Widerstandserwärmung, Induktionserwärmung und/oder Erwärmung durch Strahlen durchgeführt wird.

4. Verfahren nach dem vorhergehenden Anspruch, **dadurch gekennzeichnet, dass** vor und/oder während der Durchführung des Pressschweißverfahrens eine Erwärmung der plattenförmigen Elemente durch elektrische Widerstandsheizung, mittels elektrischer Induktion oder durch Bestrahlung mit elektromagnetischer Strahlung durchgeführt wird, bei der die Schmelztemperatur des metallischen Werkstoffs der plattenförmigen Elemente nicht erreicht wird.

5. Verfahren nach einem der vorhergehenden Ansprüche, **dadurch gekennzeichnet, dass** vor oder während der Ausbildung der stoffschlüssigen Verbindung eine Umformung der plattenförmigen Elemente mit mindestens einer an der Oberfläche konturierten Walze und einer Gegenwalze durchgeführt wird.

6. Verfahren nach einem der vorhergehenden Ansprüche, **dadurch gekennzeichnet, dass** die plattenförmigen Elemente in einem spitzen Winkel zueinander geneigt in den Walzenspalt eingeführt werden und der mindestens eine Elektronenstrahl in Vorschubbewegungsrichtung der plattenförmigen Elemente von hinten in den Spalt auf Oberflächenbereiche der plattenförmigen Elemente gerichtet wird.

7. Verfahren nach einem der vorhergehenden Ansprüche, **dadurch gekennzeichnet, dass** im Anschluss an die Ausbildung der stoffschlüssigen Verbindung eine Beschichtung an den nach außen weisenden Oberflächen der miteinander verbundenen plattenförmigen Elemente und im Anschluss daran eine Vereinzelung hergestellter Bauteile mit einem Trennverfahren durchgeführt wird.

8. Verfahren nach dem vorhergehenden Anspruch, **dadurch gekennzeichnet, dass** eine Beschichtung, die mit Kohlenstoff gebildet ist, unter Vakuumbedingungen ausgebildet wird.

9. Verfahren nach einem der Ansprüche 7 und 8, **dadurch gekennzeichnet, dass** die stoffschlüssige Verbindung und nachfolgend daran die Beschichtung in derselben Vakuumanlage ausgebildet wird.

## Claims

1. A method for producing components, in which two metal plate-like elements arranged one above the other and each having a maximum thickness of 1 mm are connected to one another fluid-tightly and in an integrally bonded manner at their outer edge regions, and
the plate-like elements are fed continuously from a reel to a processing region, in which the integrally bonded connection is formed, and the integrally bonded connection is formed continuously,
**characterized in that**:
in the process
the plate-like elements are connected in an integrally bonded manner while maintaining vacuum conditions by irradiation with at least one electron beam, wherein the at least one electron beam is directed into a gap between two plate-like elements fed to a processing region and at the same time deflected, in order to form the integrally bonded connection,
and/or
**in that** the connection is formed by means of a pressure welding method, wherein the plate-like elements are guided through between rolls as tools for the pressure welding method and are reshaped.

2. The method according to claim 1, **characterized in that** a pressure welding method with re-shaping of the plate-like elements is carried out in the region of the integrally bonded connection to be formed.

3. The method according to the preceding claim, **characterized in that** the pressure welding method is carried out by means of heating with simultaneous resistance heating, induction heating and/or heating by radiation.

4. The method according to the preceding claim, **characterized in that** before and/or during the execution of the pressure welding method, a heating of the plate-like elements is carried out by electrical resistance heating, by means of electrical induction or by irradiation with electromagnetic radiation, in which the melting point of the metallic material of the plate-like elements is not reached.

5. The method according to any one of the preceding claims, **characterized in that** before or during the forming of the integrally bonded connection, a re-shaping of the plate-like elements is carried out by means of at least one roll contoured at the surface and a counter-roll.

6. The method according to any one of the preceding claims, **characterized in that** the plate-like elements are introduced into the roll gap inclined at an acute angle to one another and the at least one electron beam, in the direction of feed of the plate-like elements, is directed from behind into the gap onto surface regions of the plate-like elements.

7. The method according to any one of the preceding claims, **characterized in that**, following the forming of the integrally bonded connection, a coating is carried out on the outwardly facing surfaces of the plate-like elements connected to one another, and, subsequently thereto, a separation of produced components is carried out by means of a separating method.

8. The method according to the preceding claim, **characterized in that** a coating that is formed with carbon is formed under vacuum conditions.

9. The method according to one of claims 7 and 8, **characterized in that** the integrally bonded connection and, subsequently thereto, the coating is formed in the same vacuum facility.

## Revendications

1. Procédé de fabrication de composants, dans lequel deux éléments métalliques en forme de plaque superposés, d'une épaisseur maximale de respectivement 1 mm, sont reliés entre eux de manière étanche aux fluides et par complémentarité de matière au niveau de leurs régions de bord extérieures, et
les éléments en forme de plaque sont amenés de manière continue par un rouleau dans une région de traitement dans laquelle la liaison par complémentarité de matière est réalisée, et la liaison par complémentarité de matière est réalisée de manière continue,
**caractérisé en ce que**
la liaison par complémentarité de matière des éléments en forme de plaque est réalisée grâce à une irradiation avec au moins un faisceau d'électrons en respectant des conditions de vide, dans lequel au moins un faisceau d'électrons est dirigé dans un interstice situé entre deux éléments en forme de plaque amenés dans une région de traitement et est dévié afin de réaliser la liaison par complémentarité de matière
et/ou
la liaison est réalisée avec un procédé de soudage par compression, dans lequel les éléments en forme de plaque sont passés et transformés entre des rouleaux faisant office d'outils pour le procédé de soudage par compression.

2. Procédé selon la revendication 1, **caractérisé en ce qu'**un procédé de soudage par compression avec transformation des éléments en forme de plaque est mis en oeuvre dans la région de la liaison par complémentarité de matière à réaliser.

3. Procédé selon la revendication précédente, **caractérisé en ce que** le procédé de soudage par compression est mis en oeuvre au moyen d'un chauffage avec simultanément chauffage par résistance, chauffage par induction et/ou chauffage par jet.

4. Procédé selon la revendication précédente, **caractérisé en ce qu'**avant et/ou pendant la mise en oeuvre du procédé de soudage par compression, un chauffage des éléments en forme de plaque par chauffage par résistance électrique, par induction électrique ou par irradiation avec un rayonnement électromagnétique est mis en oeuvre, lors duquel la température de fusion du matériau métallique des éléments en forme de plaque n'est pas atteinte.

5. Procédé selon l'une quelconque des revendications précédentes, **caractérisé en ce qu'**une transformation des éléments en forme de plaque est mise en oeuvre avec au moins un rouleau profilé en surface et un contre-rouleau avant ou pendant la réalisation de la liaison par complémentarité de matière.

6. Procédé selon l'une quelconque des revendications précédentes, **caractérisé en ce que** les éléments en forme de plaque sont introduits dans l'interstice de cylindre de manière inclinée selon un angle aigu l'un par rapport à l'autre et le au moins un faisceau d'électrons est dirigé depuis l'arrière dans l'interstice vers des régions de surface des éléments en forme de plaque dans la direction d'avancée des éléments en forme de plaque.

7. Procédé selon l'une quelconque des revendications précédentes, **caractérisé en ce que**, à la suite de la réalisation de la liaison par complémentarité de matière, un revêtement est mis en oeuvre sur les surfaces orientées vers l'extérieur des éléments en forme de plaque reliés entre eux, puis une individualisation des composants fabriqués est mise en oeuvre avec un procédé de séparation.

8. Procédé selon la revendication précédente, **caractérisé en ce qu'**un revêtement formé de carbone est réalisé dans des conditions de vide.

9. Procédé selon l'une quelconque des revendications 7 et 8, **caractérisé en ce que** la liaison par complémentarité de matière et ensuite le revêtement sont réalisés dans la même installation de production de vide.
